# EUROPÄISCHE PATENTANMELDUNG

(11) **EP 1 703 399 A1**
(43) Veröffentlichungstag der Anmeldung: **20.09.2006**
(21) Anmeldenummer: 05102094.9
(22) Anmeldetag: 17.03.2005
(51) Int. Cl.: G06F 11/14, H04L 29/06

(54) **Verfahren und System zum Betrieb redundanter Netzelemente in einem Kommunikationsnetz**

(71) Anmelder: SIEMENS AKTIENGESELLSCHAFT, 80333 München (DE)
(72) Erfinder: Prade, Johannes, 84130, Dingolfing (DE); Laghi, Giovanni, 86415, Mering (DE)
(74) Vertreter: Berg, Peter

(57) **Zusammenfassung**

Die Erfindung betrifft ein Verfahren und ein System zum Betrieb redundanter Netzelemente (MGC) in einem Kommunikationsnetz (IPN), wobei jedem aktiven Netzelement (MGC) ein Backup-Netzelement (MGCb) zugeordnet ist. Jedem Backup-Netzelement (MGCb) wird eine Backup-Steuereinheit (STEb) beigestellt und Daten, die an das aktive Netzelement (MGC) gesendet werden, werden parallel auch an das Backup-Netzelement (MGCb) gesendet. Diese Daten werden vom aktiven Netzelement (MGC) und vom Backup-Netzelement (MGCb) getrennt verarbeitet, dabei wird der vom Backup-Netzelement (MGCb) ausgesendete Datenverkehr durch die Backup-Steuereinheit (STEb) blockiert und dem Backup-Netzelement (MGCb) die Reaktion der anderen Netzelemente (NE1, NE2, NE3) simuliert. Zusätzlich ist die Backup-Steuereinheit (STEb) auch zur Überwachung des aktiven Netzelementes (MGC) und zur Umschaltung auf das Backup-Netzelement (MGCb) bei Ausfall des aktiven Netzelementes (MGC) vorgesehen.

Die mit dem erfindungsgemäßen Verfahren und System erzielten Vorteile bestehen insbesondere darin, dass durch die Einführung der Backup-Steuereinheit (STEb) die Datenbasen (DB, DBb) im aktivem (MGC) und im Backup-Netzelement (MGCb) parallel und fehlerfrei aufgebaut werden, wodurch im Fehlerfall ein automatisches Umschalten (3; 4; 5) vom aktiven Netzelement (MGC) auf das Backup-Netzelement (MGCb) ohne große Verzögerungszeiten möglich.

## Beschreibung

Verfahren und System zum Betrieb redundanter Netzelemente in einem Kommunikationsnetz

Die Erfindung betrifft ein Verfahren und ein System zum Betrieb redundanter Netzelemente in einem Kommunikationsnetz, wobei jedem aktiven Netzelement ein Backup-Netzelement zugeordnet ist.

Ein Kommunikationsnetz wird definitionsgemäß als Oberbegriff für alle Ressourcen verstanden, durch welche voneinander entfernte Netzzugangspunkte verbunden werden und von welchen diesen Dienste mit Dienstmerkmalen zu Kommunikationszwecken zur Verfügung gestellt werden.

Kommunikationsnetze sind beispielsweise:
- Telekommunikationsnetze, die als leitungsvermittelnde Netze ausgeführt sind
- paketorientierte Netze wie beispielsweise Datennetze oder als spezielle Form IP-Netze, von denen zur Kommunikation das Internet Protokoll, kurz auch als IP bezeichnet, verwenden,

Kommunikationsnetze umfassen typischerweise eine Vielzahl von Netzelementen wie beispielsweise Vermittlungsstellen sowie Softswitches, Router oder Gateways. Die Netzelemente sind mittels physikalischer Verbindungen, welche die Kommunikationswege für Daten bilden, miteinander verbunden. Von den Netzelementen werden die Kommunikationswege zum Beispiel zum Austausch von Daten mit anderen Netzelementen genutzt.

Damit die Daten zum richtigen Netzelement übertragen werden, ist in einem Kommunikationsnetz jedes Netzelement mit einer Netzadresse versehen, durch welche eine eindeutige, logische Bezeichnung des Netzelementes vorgenommen wird und durch die das Netzelement innerhalb des Kommunikationsnetzes eindeutig identifiziert werden kann. Wenn Daten anhand der Netzadresse zu einem bestimmten Netzelement gesendet werden, so wird die Netzadresse des Netzelementes auch als Zieladresse (für die Daten) bezeichnet, weil das Netzelement Ziel für diese Daten ist.

Da für Kommunikationsnetze meist eine möglichst hohe Verfügbarkeit gefordert wird und da durch einen Ausfall oder eine Zerstörung von einzelnen Netzelementen das Kommunikationsnetz oder Teile davon lahm gelegt werden können, werden Netzelemente oftmals redundant aufgeführt. Das bedeutet, dass im Kommunikationsnetz über die angenommene Datenverkehrslast hinaus zusätzliche Netzelemente vorgesehen sind, die bei Ausfällen oder im Fehlerfall genutzt werden können. Redundanz eines im Kommunikationsnetz aktiven Netzelementes bedeutet daher im allgemeinen, dass diesem aktiven Netzelement ein zweites Netzelement - so genanntes Backup-Netzelement - zugeordnet wird.

Dieses Backup-Netzelement ist mit dem aktiven Netzelement in Aufbau und Konfiguration weitgehend ident. Außerdem muss sichergestellt werden, dass das aktive Netzelement und das Backup-Netzelement dieselbe Datenbasis besitzen, damit das Backup-Netzelement beim Ausfall oder der Zerstörung des aktiven Netzelementes eingesetzt werden kann.

Ein Netzelement, das besonders häufig ausfallssicher gestaltet wird, ist ein so genannte Media Gateway Controller. Der Media Gateway Controller wird in Kommunikationsnetzen am Übergang von herkömmlichen Telekommunikationsnetzen zu IP-Netzen eingesetzt. Die Anbindung des Media Gateway Controllers an das Kommunikationsnetz erfolgt häufig durch einen so genannten Edge-Router oder auch Kanten-Router. Vom Edge-Router wird dabei die spezielle Aufgabe übernommen, Daten des Media Gateway Controllers in Daten umzuwandeln, die im Kommunikationsnetz übertragen werden können.

Bei den aus dem Stand der Technik bekannten Lösungsansätzen für die Realisierung von redundant ausgeführten Netzelementen wird meist eine ausfallssichere (redundante) Datenbasis verwendet, bei welcher die Daten des aktiven Netzelementes im Backup-Netzelement gespiegelt werden. Das bedeutet, dass die Datenbasen vom aktiven Netzelement und vom Backup-Netzelement entweder laufend oder immer zu einem bestimmten Zeitpunkt abgeglichen werden müssen, damit sie konsistent sind.

Bei einem laufenden (so genannten synchronen) Abgleich der Datenbasen ergibt sich das Problem, dass die Datenübertragungsleistung der Netzelemente sich verschlechtert, da ein Teil der Rechnerleistung für diesen Abgleich aufgewendet werden muss. Erfolgt der Abgleich der Datenbasen immer nur zu einem bestimmten Zeitpunkt wie beispielsweise einmal täglich, so kommt es zu Datenverlusten, wenn bei einem Ausfall des aktiven Netzelementes auf das Backup-Netzelement umgeschaltet wird, da jene Daten, die zwischen dem letzten Abgleich und dem Ausfall des aktiven Netzelementes am aktiven Netzelement gespeichert worden sind, nicht am Backup-Netzelement hinterlegt sind.

In der Schrift EP 1 489 778 A1 wird ein Verfahren zur Erhöhung der Ausfallsicherheit von Kommunikationsnetzen beschrieben, bei welchem von einem Ersatz-Netzelement durch den Übergang in einen anderen Betriebsmodus wie beispielsweise von "Standby" auf "aktiv" die Tätigkeiten eines ausgefallenen Netzelementes übernommen wird, wobei dieser Übergang zum Beispiel bis zu zwei Stunden dauern kann. Das bedeutet, dass von der Umschaltung vom ausgefallenen auf das Ersatz-Netzelement ebenfalls diese Zeit in Anspruch genommen wird und währenddessen über dieses Netzelement kein Datenverkehr möglich ist. Da bei dem in der Schrift EP 1 489 778 A1 beschriebenen Verfahren beide Netzelemente im Kommunikationsnetz in unterschiedlichen Betriebsmodi eingesetzt sind, ist eine beispielsweise tägliche Aktualisierung der Datenbasis notwendig. Außerdem tritt bei diesem Verfahren ebenfalls das Problem auf, dass Änderungen in der Datenbasis, die während des Aktualisierungsintervalls eingebracht worden sind, beim Umschalten auf das Ersatz-Netzelement verloren gehen.

Der vorliegenden Erfindung liegt die Aufgabe zugrunde ein Verfahren und ein System anzugeben, durch welche ohne aufwendigen Datenabgleich die Datenbasis des Backup-Netzelementes mit der des aktiven Netzelementes konsistent gehalten wird und durch welche eine kurze Umschaltzeit zwischen dem aktiven Netzelement und dem zugehörigen Backup-Netzelement ermöglicht werden.

Erfindungsgemäß erfolgt die Lösung dieser Aufgabe durch ein Verfahren zum Betrieb redundanter Netzelemente in einem Kommunikationsnetz, wobei jedem aktiven Netzelement ein Backup-Netzelement zugeordnet ist, bei welchem jedem Backup-Netzelement eine Backup-Steuereinheit beigestellt wird, Daten, die an das aktive Netzelement gesendet werden, parallel dazu auch an das Backup-Netzelement gesendet werden, diese Daten vom aktiven Netzelement und vom Backup-Netzelement getrennt verarbeitet und der vom Backup-Netzelement ausgesendete Datenverkehr durch die Backup-Steuereinheit blockiert werden, wobei aber dem Backup-Netzelement die Reaktion der anderen Netzelemente simuliert wird.

Die mit der Erfindung erzielten Vorteile bestehen insbesondere darin, dass durch die Einführung der Backup-Steuereinheit die Datenbasen im aktivem und im Backup-Netzelement parallel aufgebaut werden, ohne dass ein aufwendiger Abgleich der Datenbasen notwendig wird. Beim Backup-Netzelement wird durch die Backup-Steuereinheit, die die Reaktionen der anderen Netzelemente simuliert, ein fehlerfreier Aufbau der Datenbasis ermöglicht. Dadurch ist ein nahtloser Übergang vom aktiven Netzelement zum Backup-Element möglich. Außerdem bietet dieses Verfahren den Vorteil, dass es keine Einschränkung bei der geografischen Entfernung zwischen aktiven Netzelement und zugehörigem Backup-Netzelement gibt.

Eine bevorzugte Weiterbildung des erfindungsgemäßen Verfahrens sieht vor, dass von der Backup-Steuereinheit das aktive Netzelement überwacht und bei dessen Ausfall oder Zerstörung den Datenverkehr vom Backup-Netzelement zum Kommunikationsnetz automatisch herstellt und damit automatisch vom aktiven Netzelement auf das Backup-Netzelement umgeschaltet wird. Dadurch wird der Ausfall eines Netzelementes möglichst rasch erkannt, eine möglichst kurze Umschaltzeit auf das Backup-Netzwerkelement erreicht und ein längerer Ausfall im Kommunikationsnetz verhindert.

Es ist günstig, wenn dem aktiven Netzelement und dem zugehörigen Backup-Netzelement unterschiedliche Netzadressen zugewiesen werden. Dadurch wird beim Ausfall eines Netzelementes eine Umkonfiguration von anderen Netzelementen wie zum Beispiel bei Routern im Kommunikationsnetz vermieden, denn das Backup-Netzelement ist bereits mit seiner eigenen Netzadresse im Kommunikationsnetz registriert und über die Backup-Steuereinheit, von der nur der vom Backup-Element ausgesendeten Datenverkehr blockiert wird, an das Kommunikationsnetz angebunden.

Es ist vorteilhaft, wenn für die Kommunikation zwischen aktivem Netzelement und Backup-Netzelement das Internet Protokoll und ein IP-Netz vorgesehen wird, weil in einem IP-Netz die Kommunikationswege von den anderen Netzelementen zum aktiven wie zum Backup-Netzelement bereits eingerichtet werden können. Das aktive bzw. das Backup-Netzelement wird dann auf einfache Weise über seine jeweilige Netzadresse angesprochen. Außerdem kann das aktive Netzelement von der Backup-Steuereinheit auf einfache Weise mittels Nachrichtenaustausch überwacht werden.

Zweckmäßigerweise wird das aktive Netzelement über einen ersten Edge-Router und die Backup-Steuereinheit des Backup-Elementes über eine zweiten Edge-Router angebunden. Durch den Einsatz redundanter Edge-Router wird eine größere geografische Entfernung zwischen aktiven und Backup-Netzelement ermöglicht.

Bei einem besonders bevorzugten Ausführungsbeispiel wird als aktives Netzelement und als zugehöriges Backup-Netzelement jeweils ein Media Gateway Controller vorgesehen, da dieser in Kommunikationsnetzen am Übergang von herkömmlichen Telekommunikationsnetzen zu IP-Netzen eingesetzt wird.

Die Lösung der Aufgabe erfolgt weiters durch ein System der eingangs erwähnten Art, wobei zu einem aktiven Netzelement ein Backup-Netzelement vorgesehen ist und wobei zum Backup-Netzelement eine Backup-Steuereinheit zur Simulation des Datenverkehrs zwischen dem Backup-Netzelement und den anderen Netzelementen in einem Kommunikationsnetz, zur Überwachung des aktiven Netzelementes und zur Umschaltung auf das Backup-Netzelement bei Ausfall oder Zerstörung des aktiven Netzelementes vorgesehen ist.

Das erfindungsgemäße System bietet den Vorteil, dass durch das Backup-Element, welches zum aktiven Netzelement vorgesehen ist, die Ausfallsicherheit und damit die Verfügbarkeit des gesamten Kommunikationsnetzes erhöht wird. Durch die die Einführung der Backup-Steuereinheit werden die Datenbasen im aktiven und im Backup-Netzelement parallel aufgebaut, ohne dass ein aufwendiger Abgleich der Datenbasen notwendig wird. Zusätzlich wird durch die Simulation der Reaktionen der anderen Netzelemente durch die Backup-Steuereinheit die Datenbasis des Backup-Netzelementes fehlerfrei aufgebaut und ein nahtloser Übergang vom aktiven Netzelement zum Backup-Element ermöglicht. Weiters ist beim Ausfall des aktiven Netzelementes ein rasches Umschalten auf das Backup-Netzelement möglich, da die Backup-Steuereinheit das aktive Netzelement überwacht und die Umschaltung durchführt.

Zusätzlich kann es weiterhin vorteilhaft sein, wenn das aktive Netzelement als erste Zieladresse und das zugehörige Backup-Netzelement als zweite Zieladresse für andere Netzelemente im Kommunikationsnetz eingetragen ist, denn dadurch sind beide Netzelement im Kommunikationsnetz bekannt. Sie können über die jeweilige Zieladresse angesprochen werden. Bei einem Ausfall des aktiven Netzelementes ist die Zieladresse des Backup-Netzelementes verfügbar und eine aufwendige Umkonfiguration des Kommunikationsnetzes ist nicht mehr notwendig.

Die Erfindung wird in beispielhafter Weise unter Bezugnahme auf die Figuren näher erläutert.

Es zeigen beispielhaft:
- Fig.1: den funktionellen Aufbau des erfindungsgemäßen Systems für den Betrieb eines redundanten Netzelementes "Media Gateway Controller" in einem Kommunikationsnetz, in dem das erfindungsgemäße Verfahren zum Einsatz kommt
- Fig.2: den schematischen Ablauf des erfindungsgemäßen Verfahrens beim Ausfall des aktiven Netzelementes "Media Gateway Controller"

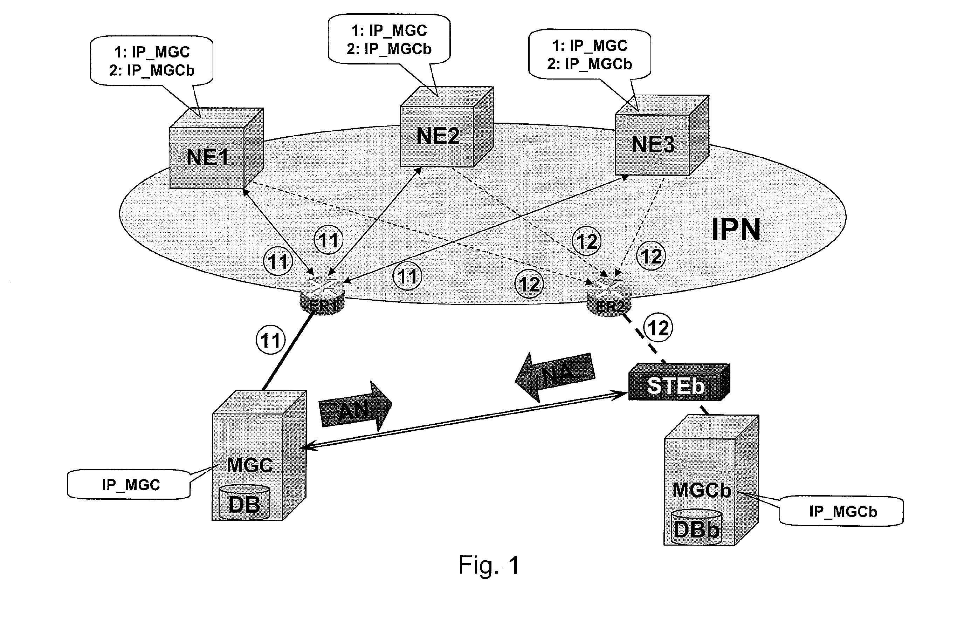

Figur 1 zeigt als Kommunikationsnetz IPN ein zur Kommunikation eingesetztes IP-Netz, das neben anderen Netzelement NE1, NE2, NE3 ein redundant ausgeführtes Netzelement "Media Gateway Controller" MGC umfasst. Dem Netzelement MGC ist ein Backup-Netzelement MGCb - ebenfalls ein Media Gateway Controller - zugeordnet. Das aktive Netzelement MGC und das Backup-Netzelement MGCb umfassen weitgehend dieselben Hardware- und Software-Module sowie Datenbanken DB, DBb und werden beide im aktiven Betriebsmodus betrieben. Es sind dem aktiven Netzelement MGC und dem Backup-Netzelement MGCb allerdings unterschiedliche Netzadressen IP_MGC und IP_MGCb im Kommunikationsnetz IPN zugewiesen.

Das aktive Netzelement MGC ist über einen Edge-Router ER1 an das Kommunikationsnetz IPN angebunden. Die Kommunikation mit den anderen Netzelementen NE1, NE2, NE3 des Kommunikationsnetzes IPN wird über einen Kommunikationsweg 11 durchgeführt. Über diesen Kommunikationsweg 11 werden Daten vom Netzelement MGC erhalten, die von den anderen Netzelementen NE1, NE2, NE3 an das Netzelement MGC gesendet werden. Diese Daten werden vom Netzelement MGC verarbeitet und in seiner Datenbank DB hinterlegt.

Das zugehörige Backup-Netzelement MGCb ist ebenfalls über einen Edge-Router ER2 und einen Kommunikationsweg 12 an das Kommunikationsnetz IPN angebunden, wobei zwischen dem Edge-Router ER2 und dem Backup-Netzelement MGCb eine zum Backup-Netzelement gehörige Backup-Steuereinheit STEb eingefügt ist. Alle Daten, die von den anderen Netzelementen NE1, NE2, NE3 über den Kommunikationsweg 11 an das aktive Netzelement MGC gesendet werden, werden parallel über den Kommunikationsweg 12 auch an das Backup-Netzelement MGCb übertragen. Vom Backup-Netzelement MGCb werden die Daten ebenfalls verarbeitet, wobei von der Backup-Steuereinheit STEb der vom Backup-Netzelement MGCb an das Kommunikationsnetz IPN gesendete Datenverkehr blockiert wird. Damit die Daten, die in der Datenbank DB des aktiven Netzelementes MGC gespeichert werden, genauso in der Datenbank DBb des Backup-Netzelementes MGCb hinterlegt werden können, werden die Reaktionen der anderen Netzelemente NE1, NE2, NE3 von der Backup-Steuereinheit STEb dem Backup-Netzelement MGCb simuliert. Zusätzlich wird das aktive Netzelement MGC mittels von der Backup-Steuereinheit STEb versandter Nachrichten NA überwacht. Vom aktiven Netzelement MGC wird mit einer Antwortnachricht AN geantwortet.

Zur Überwachung des aktiven Netzelementes MGC wird von der Backup-Steuereinheit STEb des Backup-Netzelementes MGCb in einem ersten Schritt 1 eine Nachricht NA an aktive Netzelement MGC gesendet. Ist das aktive Netzelement MGC beispielsweise ausgefallen oder zerstört worden, so wird von der Backup-Steuereinheit STEb in einem zweiten Schritt 2 nicht die erwartete Antwortnachricht AN erhalten. So wird in einem dritten Schritt 3 die Blockade des Datenverkehrs vom Backup-Netzelement MGCb zum Kommunikationsnetz IPN - und damit zu den anderen Netzelementen NE1, NE2, NE3 - über den Edge-Router ER2 und den Kommunikationsweg 12 aufgehoben. Vom Backup-Netzelement MGCb wird damit in einem vierten Schritt 4 die Funktion des aktiven Netzelementes MGC übernommen. Da die Netzadresse IP_MGCb als zweite Zieladresse bei den Netzelementen NE1, NE2, NE3 des Kommunikationsnetzes IPN hinterlegt ist, werden von den anderen Netzelementen NE1, NE2, NE3 Daten in einem fünften Schritt automatisch an das Backup-Netzelement MGCb gesendet, wenn die Verbindung über die Netzadresse IP_MGC, die als erste Zieladresse eingetragen worden ist, zum Netzelement MGC fehlgeschlagen ist.

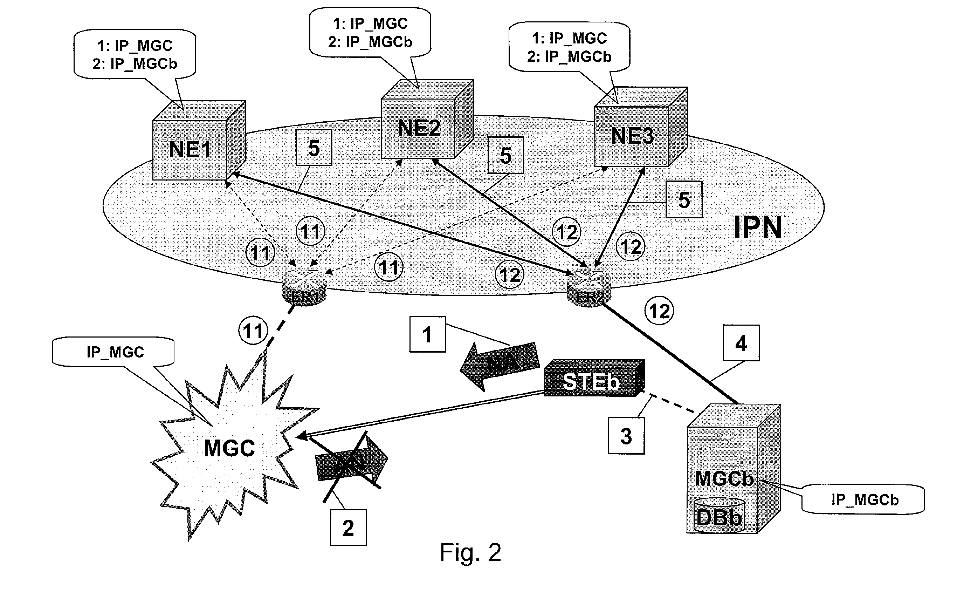

Das in Figur 1 beispielhaft für ein Netzelement "Media Gateway Controller" MGC und das zugehörige Backup-Netzelement MGCb dargestellte System zum Betrieb redundanter Netzelemente sowie das in Figur 2 dargestellte erfindungsgemäße Verfahren kann gleichermaßen für jedes andere Netzelement NE1, NE2, NE3 in einem beliebigen Kommunikationsnetz IPN eingesetzt werden, sofern das Netzelement NE1, NE2, NE3 redundant ausgeführt ist. Vom Prinzip her gilt dabei die gleiche Vorgehensweise.

## Patentansprüche

1. Verfahren zum Betrieb redundanter Netzelemente (MGC) in einem Kommunikationsnetz (IPN), wobei jedem aktiven Netzelement (MGC) ein Backup-Netzelement (MGCb) zugeordnet ist, **dadurch gekennzeichnet, dass** jedem Backup-Netzelement (MGCb) eine Backup-Steuereinheit (STEb) beigestellt wird,
dass Daten, die an das aktive Netzelement (MGC) gesendet werden, parallel dazu auch an das Backup-Netzelement (MGCb) gesendet werden,
dass diese Daten vom aktiven Netzelement (MGC) und vom Backup-Netzelement (MGCb) getrennt verarbeitet werden, und dass der vom Backup-Netzelement (MGCb) ausgesendete Datenverkehr durch die Backup-Steuereinheit (STEb) blockiert und dem Backup-Netzelement (MGCb)die Reaktion der anderen Netzelemente (NE1, NE2, NE3) simuliert wird.

2. Verfahren nach den Anspruch 1 **dadurch gekennzeichnet, dass** das aktive Netzelement (MGC) von der Backup-Steuereinheit (STEb) des Backup-Netzelement (MGCb) überwacht wird (1), dass bei einem Ausfall oder einer Zerstörung des aktiven Netzelementes (MGC) dieser Ausfall oder diese Zerstörung von der Backup-Steuereinheit (STEb) des Backup-Netzelement (MGCb) erkannt wird (2), dass der Datenverkehr vom Backup-Netzelementes (MGCb) zum Kommunikationsnetz (IPN) automatisch durch die Backup-Steuereinheit (STEb) hergestellt (3) und so automatisch vom aktiven Netzelement (MGC) auf das Backup-Netzelement (MGCb) umgeschaltet wird (4; 5).

3. Verfahren nach Ansprüchen 1 bis 2 **dadurch gekennzeichnet, dass** dem aktiven Netzelement (MGC) und dem zugehörigen Backup-Netzelement (MGCb) unterschiedliche Netzadressen (IP_MGC; IP_MGCb) zugewiesen werden.

4. Verfahren nach den Ansprüchen 1 bis 3 **dadurch gekennzeichnet, dass** zwischen dem aktiven Netzelement (MGC) und dem Backup-Netzelement (MGCb) zur Kommunikation das Internet Protokoll und ein IP-Netz vorgesehen wird.

5. Verfahren nach Anspruch 3 **dadurch gekennzeichnet, dass** das aktive Netzelement (MGC) über einen ersten Edge-Router (ER1) und die Backup-Steuereinheit (STEb) des Backup-Netzelementes (MGCb) über einen zweiten Edge-Router (ER2) an das zu Kommunikation vorgesehene IP-Netz angebunden wird.

6. Verfahren nach den Ansprüchen 1 bis 5 **dadurch gekennzeichnet, dass** als aktives Netzelement (MGC) und als zugehöriges Backup-Netzelement (MGCb) jeweils ein Media Gateway Controller vorgesehen werden.

7. System, das zur Durchführung eines Verfahrens nach den Ansprüchen 1 bis 5 eingerichtet ist, **dadurch**
**gekennzeichnet, dass**
• zu einem aktiven Netzelement (MGC) ein Backup-Netzelement (MGCb) vorgesehen ist,
• und dass zum Backup-Netzelement (MGCb) eine Backup-Steuereinheit (STEb) zur Simulation des Datenverkehrs zwischen dem Backup-Netzelement und den anderen Netzelementen (NE1, NE2, NE3) in einem Kommunikationsnetz (IPN), zur Überwachung des aktiven Netzelementes (MGC) und zur Umschaltung auf das Backup-Netzelement bei Ausfall oder Zerstörung des aktiven Netzelementes (MGC) vorgesehen ist.

8. System nach Anspruch 6 **dadurch gekennzeichnet, dass** das aktive Netzelement (MGC) als erste Zieladresse und das zugehörige Backup-Netzelement (MGCb) als zweite Zieladresse für die anderen Netzelemente (NE1, NE2, NE3) im Kommunikationsnetz (IPN) eingetragen ist.
